# EUROPEAN PATENT APPLICATION

(11) **EP 1 788 316 A1**
(43) Date of publication of application: **23.05.2007**
(21) Application number: 06122904.3
(22) Date of filing: 25.10.2006
(51) Int. Cl.: F24F 3/14

(54) **Condensing dehumidifier particularly for industrial applications**

(30) Priority: 18.11.2005 IT PD20050334
(71) Applicant: Hidros S.r.l., 35129 Padova (IT)
(72) Inventor: Pozza, Vittorio, 36067, Cassola VI (IT)
(74) Representative: Modiano, Micaela Nadia

(57) **Abstract**

A condensing dehumidifier, particularly for industrial applications, comprising, inside a box-like containment body (11), three heat recovery units with crossed streams (12, 13, 14), of which: a first recovery unit (12) for precooling the stream of air in input (15) and reheating the stream of dehumidified and cooled air (16) in output from the dehumidifier (10); a second recovery unit (13), associated with first condensing means; a third recovery unit (14), associated with second condensing means. The dehumidifier (10) comprises means for redirecting the streams of air which are suitable to send alternately the stream of precooled air (17), in output from the first recovery unit (12), first to the second or third recovery unit (13, 14), whose associated condensing means are inactive, and then to the other of said second and third recovery units (13, 14) whose associated condensing means are active, the air streams being moved by ventilation means.

## Description

The present invention relates to a condensing dehumidifier particularly for industrial applications.

Dehumidifying air entails removing from said air part of the water vapor that it contains.

Control of relative humidity and prevention of condensation phenomena are particularly important for environments such as archives, laundries, dairies, underground structures in general, and cellars, and in all industrial environments in which production processes require low relative humidity.

Water vapor can be removed by means of the chemical process of adsorption or by means of the thermal and physical process of condensation.

When the required degree of humidity of the air is particularly low, rotating-drum devices, which apply the adsorption principle, are generally used.

The expression "low degree of humidity" is used to designate air with a dew point temperature below 0°C, i.e., with a specific humidity of less than 3.7 g per kilogram of humid air.

Rotating-drum devices are constituted generally by a drum, the internal structure of which is of the cellular type and in which the cells have surfaces coated with a silica gel or other equivalent material which has a high adsorbent power.

The drum is struck by the process air in an axial direction and simultaneously turns so that a portion thereof, loaded with adsorbed moisture, is exposed to an appropriately heated stream of air, which is suitable to dry and regenerate the silica gel.

However, this drum device entails that the dehumidified air in output is at a much higher temperature than the air in input, due to the overheating to which the drum is subjected in its passage through the stream of heated air for regeneration.

The aim of the present invention is to provide a condensing dehumidifier particularly for industrial applications which allows to control the temperature of the dehumidified air in output toward the environment.

Within this aim, an object of the present invention is to provide a condensing dehumidifier which has a higher efficiency than known types of dehumidification device.

Another object of the present invention is to provide a condensing dehumidifier whose energy consumption is not higher than that of known types of dehumidification device.

Another object of the present invention is to provide a condensing dehumidifier particularly for industrial applications which can be produced with known systems and technologies.

This aim and these and other objects, which will become better apparent hereinafter, are achieved by a condensing dehumidifier, particularly for industrial applications, characterized in that it comprises, inside a box-like containment body, at least three heat recovery units with crossed streams, of which:
- a first recovery unit for precooling the stream of air in input and reheating the stream of dehumidified and cooled air in output from the dehumidifier,
- a second recovery unit, associated with first condensing means;
- a third recovery unit, associated with second condensing means,
said dehumidifier comprising means for redirecting the streams of air which are suitable to send alternately a stream of precooled air, in output from said first recovery unit, first to the second or third recovery unit, whose associated condensing means are inactive, and then to the other of said second and third recovery units whose associated condensing means are active, said air streams being moved by ventilation means, said first recovery unit being suitable to cross said air stream in input from the outside with said stream of dehumidified and cooled air which arrives from a selected one of said second and third recovery units, one of said second and third recovery units which has not been selected and whose corresponding associated condensing means are inactive being suitable to cross the stream of precooled air that arrives from said first recovery unit with said stream of precooled air, which is further precooled by passing through the associated inactive condensing means, the other of said second and third recovery units being suitable to cross said stream of further precooled air and said stream of further precooled air, which is dehumidified and cooled by passing through the active condensing means.

Further characteristics and advantages of the invention will become better apparent from the following detailed description of a preferred but not exclusive embodiment thereof, illustrated by way of non-limiting example in the accompanying drawings, wherein:
Figure 1 is a schematic top view of a dehumidifier according to the invention;

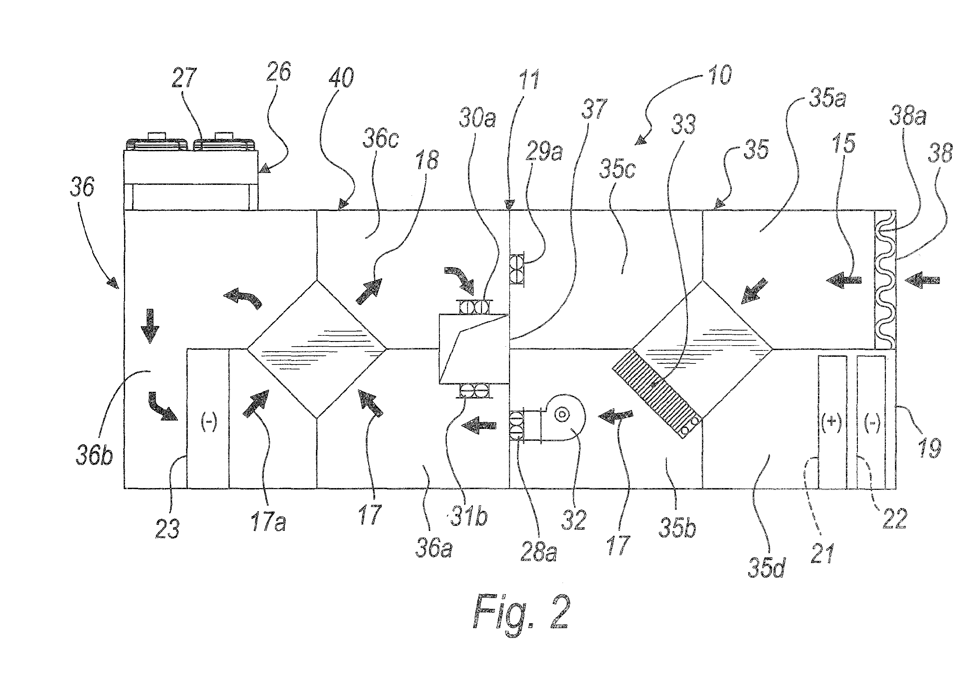

Figure 2 is a first schematic internal side view of a dehumidifier according to the invention;

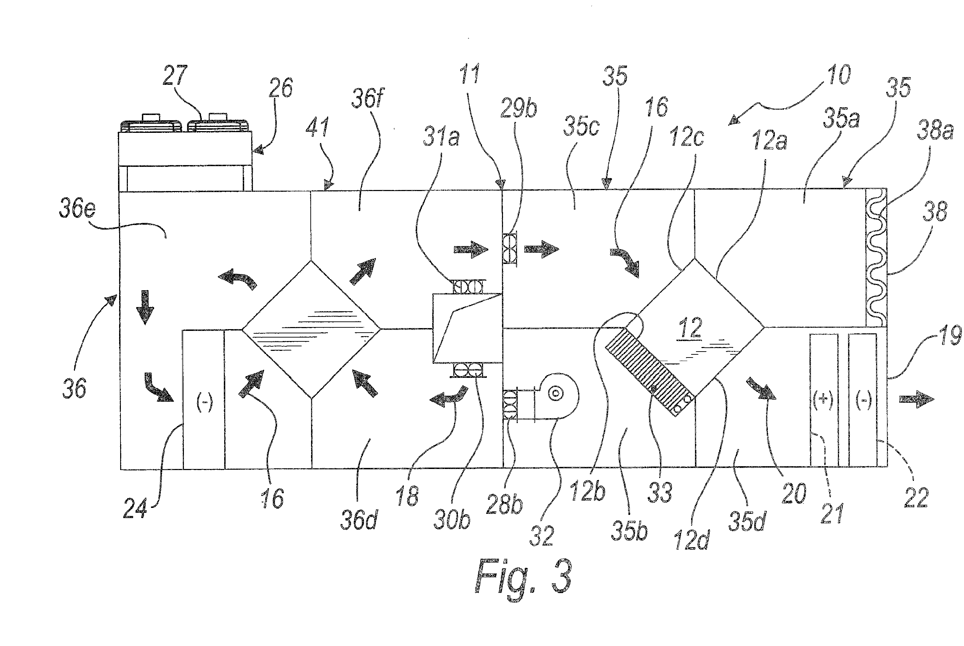

Figure 3 is a second schematic internal side view of a dehumidifier according to the invention;
Figure 4a is a view of a first portion of a general diagram of a dehumidifier according to the invention;
Figure 4b is a view of a second portion of a general diagram of a dehumidifier according to the invention.

With reference to the figures, a condensing dehumidifier particularly for industrial applications according to the invention is generally designated by the reference numeral 10.

The dehumidifier 10 comprises, in the embodiment described here by way of non-limiting example of the invention, three heat recovery units with crossed streams 12, 13 and 14.

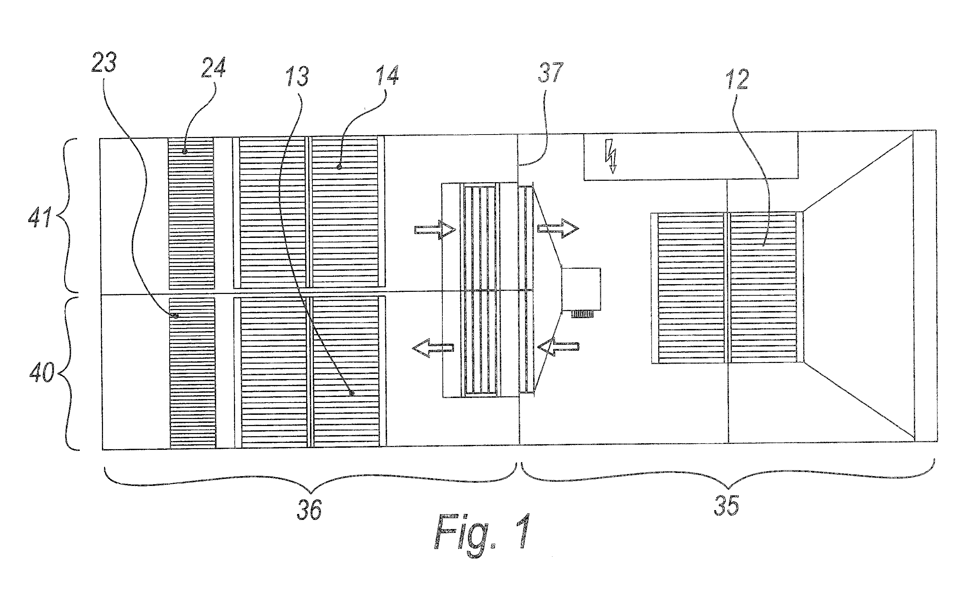

A first recovery unit 12 is suitable to precool the air stream in input, designated by the arrow 15 in Figure 1, and to reheat the stream of dehumidified and cooled air 16 in output from the dehumidifier 10.

A second recovery unit 13 is associated with first condensing means, described in greater detail hereinafter, for dehumidifying and cooling the air.

A third recovery unit 14 is associated with second condensing means, also described in greater detail hereinafter.

Inside the first recovery unit 12, the air stream in input from the outside 15 crosses the stream of dehumidified and cooled air 16 that arrives from one of the second and third recovery units 13 and 14.

One of the second and third recovery units 13 and 14, the corresponding associated condensing means of which are inactive, is suitable to cross the stream of precooled air 17 that arrives from the first recovery unit 12 with said stream, designated by the reference numeral 18, of precooled air which is further precooled by passing through the associated inactive condensing means.

The other of the second and third recovery units 13 and 14 is suitable to cross the stream of further precooled air 18 and said stream of further precooled air, which is dehumidified and cooled 16 by passing through the active condensing means.

The dehumidifier 10 comprises means for redirecting the air streams, which are suitable to send alternately the precooled air stream 17 first onto the recovery unit whose associated condensing means are inactive and then onto the other recovery unit whose associated condensing means are active.

Such air stream redirection means are constituted by a series of motorized shutters, designated by the reference numerals 28a, 28b, 29a, 29b, 30a, 30b, 31a and 31b, the opening/closure of which is coordinated by an electronic control unit for managing the dehumidifier 10 and the operation of which is described in greater detail hereinafter.

The air streams are moved by ventilation means.

The air stream ventilation means are constituted by a centrifugal fan 32.

The first and second condensing means are constituted respectively by a first evaporator 23 and a second evaporator 24, which operate alternately and are part of a refrigeration unit 25.

The refrigeration unit 25 comprises a condenser 26, with its own ventilation means for heat dissipation 27, and said condenser 26 is functionally connected to both of said first and second evaporators 23 and 24.

The refrigeration unit 25 comprises at least one compressor 27 for recirculation of the refrigeration fluid.

Inside a box-like body 11, proximate to the opening 19 for discharge into the environment from the dehumidifier 10, there are means for adjusting the temperature of the stream of dehumidified and reheated air 20 that exits from the first recovery unit 12.

Conveniently, the temperature adjustment means comprise a heating air/water exchange battery 21, for further auxiliary reheating of the stream of dehumidified and reheated air 20 that exits from the first recovery unit 12.

Advantageously, the heating exchange battery 21 is supplied with warm water which is produced by means of a plate-type heat recovery unit 34, which is associated with the refrigeration unit 25; the plate-type recovery unit 34 utilizes at no cost the condensation heat provided by the refrigeration cycle of the refrigeration unit 25.

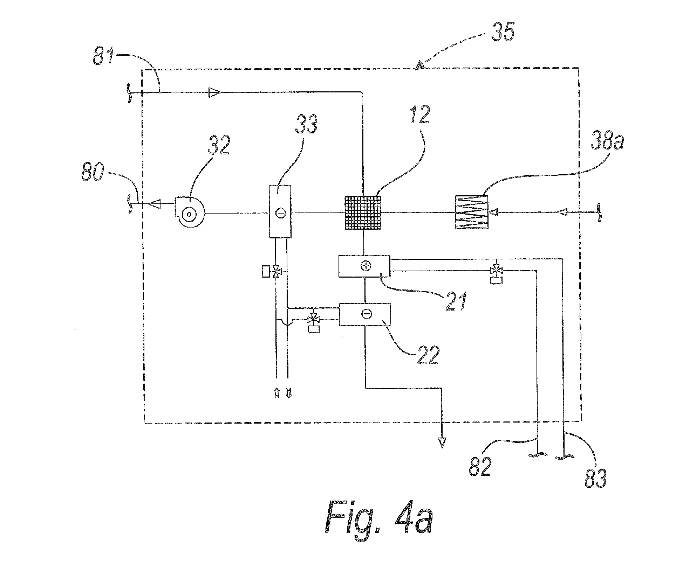

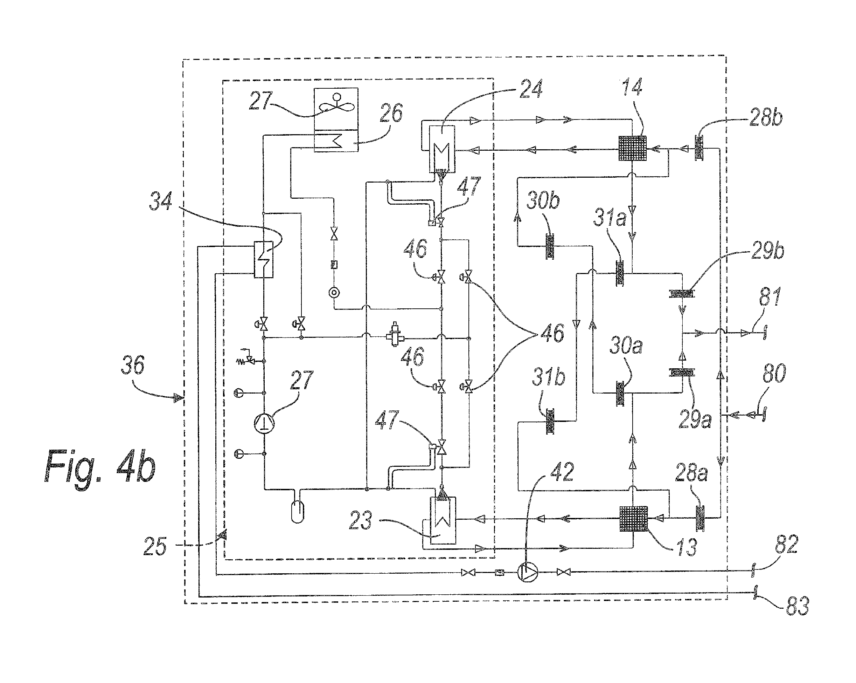

In Figures 4a and 4b, a first line 82 represents the path of the heated water heated from the plate-type recovery unit 34 to the heating battery 21, whereas an adjacent second line 83 represents the return path of the water from the heating battery 21 to the plate-type recovery unit 34.

The water is recirculated between the plate-type recovery unit 34 and the heating battery 21 by means of a pump 42.

The temperature adjustment means comprise an additional cooling air/water exchange battery 22, for optional auxiliary post-cooling of the dehumidified and reheated air stream 20 that exits from the first recovery unit 12.

At the output of the precooled air stream 17 from the first recovery unit 12 there is an auxiliary precooling battery 33 of the air/water type.

The box-like containment body 11 is composed of two sections, a first section 35 which contains the first recovery unit 12, the heating battery 21 and the cooling battery 22, the centrifugal fan 32 and the auxiliary precooling battery 33, and a second section 36, which contains the second and third crossed-stream recovery units 13 and 14 arranged in parallel and the refrigeration unit 25.

The series of shutters 28a, 28b, 29a, 29b, 30a, 30b, 31a and 31b is provided on the partition 37 between the two sections 35 and 36.

In particular, the first section 35 is divided into four compartments.

A first intake compartment 35a is provided with the intake opening 38, which is equipped with a filter 38a, for the warm air that arrives from outside; said first compartment 35a is open onto a first inlet 12a of the first recovery unit 12.

A second compartment 35b for the transit of the precooled air stream 17 that exits from a first outlet 12b is the one inside which the centrifugal fan 32 and the auxiliary precooling battery 33 are installed.

A third compartment 35c for the transit of the dehumidified and cooled air stream 16 that arrives from the second section 36 is open onto the second inlet 12c of the first recovery unit 12.

The fourth compartment 35d contains the heating battery 21 and the cooling battery 22, and the stream of reheated dehumidified and cooled air 20 that exits from the second outlet 12d of the first recovery unit 12 flows inside it and is directed toward the opening for discharge into the environment 19.

The second section 36 is divided in turn into two parts 40 and 41: the first part 40, which contains a second recovery unit 13 with the associated evaporator 23, and a second part 41, which contains the third recovery unit 14 and the associated evaporator 24.

The second section 36 comprises the refrigeration unit 25 as a whole.

Each of the two parts 40 and 41 that constitute the second section 36 comprises three compartments.

A first compartment, respectively 36a and 36d, is designed for reception and is crossed internally alternately by the precooled air stream 17 that exits from the first recovery unit 12 and by the stream of further precooled air 18 that exits from the adjacent second or third recovery unit 13 or 14, whose evaporator is inactive.

A second compartment, respectively 36b and 36e, is designed for dehumidification and cooling, and the corresponding evaporator 23 or 24 is arranged inside it.

The third compartment, respectively 36c and 36f, is designed for the transit alternatively of the stream of further precooled air 18 which is directed toward the adjacent recovery unit 13 or 14 and of the stream of dehumidified and cooled air 16 which is directed toward the third compartment 35c of the first section 35.

The series of shutters comprises:
- a pair of first shutters 28a and 28b, each of which is suitable to connect the second compartment 35b of the first section 35 to one of the first compartments 36a and 36d of the second section 36;
- a pair of second shutters 29a and 29b, each of which is suitable to connect one of the third compartments 36c and 36f of the second section 36 to the third compartment 35c of the first section 35;
- two pairs of third shutters 30a and 30b, and fourth shutters 31a and 31b, which are suitable to connect a third compartment 36c and 36f of a part 40 or 41 of the second section 36 to the first compartment 36a and 36d of the other part of the second section 36.

In the schematic Figures 4a and 4b, the line 80, which exits from the fan 32, indicates the path of the air in output from the first recovery unit 12 and in input to the second section 36, whereas the line 81 illustrates schematically the path of the dehumidified and cooled air in output from the second section 36 and in input to the first section 35 and to the second recovery unit 12 contained therein.

The operation of the dehumidifier 10 according to the invention is as follows.

The stream of air in input 15 is aspirated into the first compartment 35a of the first section 35 for example at a temperature of 20°C and with a specific humidity of approximately 8.73 g per kilogram of humid air.

The air stream in input 15 passes through the first crossed-stream recovery unit 12, inside which it crosses the stream of dehumidified and cooled air 16 that arrives from the second section 36.

Within the first recovery unit 12, the air stream in input 15 transfers heat to the dehumidified air stream 16, which is at a lower temperature, increasing its temperature before it exits from the dehumidifier 10 at a temperature which is excessively lower than the ambient temperature.

At the same time, the air stream in input 15 undergoes precooling.

With the first recovery unit 12 one obtains two advantages: a first advantage is linked to the precooling of the air stream in input, which allows to improve the efficiency of the evaporator that is active in the second section 36 by removing part of the sensible heat which otherwise would be a burden for said active evaporator; a second advantage is that the air in output is heated, reducing the amount of heat required of the heating battery 21, which is activated if the air in output 20 is too cold with respect to the ambient temperature.

The air stream in output from the first section 35 is sent, in the second section 36, first through the inactive evaporator and then through the active evaporator.

The two recovery units are in fact periodically and alternately deactivated in order to defrost them, since extreme dehumidification, i.e., at specific humidity levels of less than 3.7 g/kg, requires dewpoint temperatures between -10°C and -15°C, which entail the formation of frost on the active evaporator and also on the contiguous recovery unit.

The first evaporator 23 and the second evaporator 24 are thus activated alternately indeed because the stream of precooled air, which has in any case a temperature which is even higher than the temperature of the inactive evaporator, strikes first said inactive evaporator, melting the frost that has formed thereon and at the same time precooling itself further.

Consider for example a first step of operation, in which the first evaporator 23 is inactive while the second evaporator 24 is active.

In the first step, the first shutter 28a is open, allowing the stream of precooled air 17 to pass from the second compartment 35b of the first section 35 to the first compartment 36a of the first part 40 of the second section 36.

The corresponding first shutter 28b for connection between the second compartment 35b and the first compartment 36d of the second part 41 of the second section 36 is therefore closed.

The stream of precooled air 17 thus flows through the second recovery unit 13, as shown by way of example in Figure 1, where it transfers heat to the defrosting air stream 17a which has just crossed the first evaporator 23, cooperating in the melting of the frost that has formed thereon.

In this first step of operation, the third pair of shutters 30a and 30b is open, while the fourth pair of shutters 31a and 31b is closed.

This configuration allows the stream of further precooled air 18 to pass from the third compartment 36c of the first part 40 to the first compartment 36d of the second part 41.

The stream of further precooled air 18 by means of the first compartment 36d reaches the third heat recovery unit with crossed streams 14, inside which it crosses the stream of dehumidified and cooled air 16 that exits from the second evaporator 24.

Inside the second compartment 36e of the second part 41 of the second section 36, between the second evaporator 24 and the third recovery unit 14, the temperature is approximately -10°C and the specific humidity drops to 1.69 g per kilogram of moist air.

The stream of dehumidified and cooled air 16 increases its temperature first inside the third recovery unit 14 and then inside the first recovery unit 12, where it arrives by means of the open gate 29b and where it crosses, as mentioned, the air stream in input 15.

The gradual increase in temperature of the dehumidified air stream 16 in its path toward the opening 19 for discharge into the environment allows an important energy saving in relation to the reheating of the dehumidified air stream 16.

Further, as mentioned, the heating battery 21 is supplied with water which is heated by the plate-type heat recovery unit 34 associated with the refrigeration unit 25, which as mentioned utilizes at no cost the condensation heat provided by the refrigeration cycle of the refrigeration unit 25.

When layers of frost form on the second evaporator 24 and on the third recovery unit 14, the electronic control unit, not shown for the sake of simplicity, controls the simultaneous opening of the closed shutters 28b, 31a, 31b, 29a and closure of the open shutters 28a, 30a, 30b, 29b.

In this manner, the stream of precooled air 17 first reaches the second evaporator 24, which is inactive and is to be defrosted, and then passes through the first evaporator 23, which is active, to be dehumidified.

The first evaporator 23 and the second evaporator 24 are activated alternately by opening or closing respective solenoid valves 46, which are arranged on the line of the liquid refrigeration fluid directly upstream of the corresponding thermostatic expansion valve 47.

Every heat exchange that occurs within the recovery units 12, 13 and 14 entails an energy saving.

As a whole, therefore, the dehumidifier 10 absorbs, in proportion to its yield, far less electricity than known types of adsorption dehumidifiers.

The auxiliary precooling battery 33 is activated when the air in input is too warm to be treated by the evaporators 23 and 24.

The auxiliary preheating battery 33, together with the post-cooling cooling battery 22, is supplied by a refrigeration unit which is external with respect to the dehumidifier 10.

The dehumidifier 10 according to the invention is therefore capable of operating continuously, without requiring interruptions to free from frost one or more of its components.

This is achieved while providing an important heat recovery by means of the three crossed-stream heat recovery units 12, 13 and 14 and while maintaining control of the temperature of the air in output from the dehumidifier 10.

In practice it has been found that the invention thus described solves the problems noted in known types of dehumidifier particularly for industrial applications.

In particular, it has been found that the present invention allows to control the temperature of the dehumidified air in output toward the environment.

Moreover, the present invention provides a condensing dehumidifier which has a higher efficiency than known types of dehumidification devices.

Further, the present invention provides a condensing dehumidifier which has a lower energy consumption than known types of dehumidification devices.

Moreover, the present invention provides a condensing dehumidifier particularly for industrial applications which can be manufactured with known systems and technologies.

The invention thus conceived is susceptible of numerous modifications and variations, all of which are within the scope of the appended claims; all the details may further be replaced with other technically equivalent elements.

In practice, the materials employed, so long as they are compatible with the specific use, as well as the dimensions, may be any according to requirements and to the state of the art.

The disclosures in Italian Patent Application No. PD2005A000334 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A condensing dehumidifier, particularly for industrial applications, **characterized in that** it comprises, inside a box-like containment body (11), at least three heat recovery units with crossed streams (12, 13, 14), of which:
- a first recovery unit (12) for precooling the stream of air in input (15) and reheating the stream of dehumidified and cooled air (16) in output from the dehumidifier (10),
- a second recovery unit (13), associated with first condensing means;
- a third recovery unit (14), associated with second condensing means,
said dehumidifier (10) comprising means for redirecting the streams of air which are suitable to send alternately a stream of precooled air (17), in output from said first recovery unit (12), first to the second or third recovery unit (13, 14), whose associated condensing means are inactive, and then to the other of said second and third recovery units (13, 14) whose associated condensing means are active, said air streams being moved by ventilation means, said first recovery unit (12) being suitable to cross said air stream in input from the outside (15) with said stream of dehumidified and cooled air (16) which arrives from a selected one of said second and third recovery units (13, 14), one of said second and third recovery units (13, 14) which has not been selected and whose corresponding associated condensing means are inactive being suitable to cross the stream of precooled air (17) that arrives from said first recovery unit (12) with said stream of precooled air, which is further precooled (18) by passing through the associated inactive condensing means, the other of said second and third recovery units (13, 14) being suitable to cross said stream of further precooled air (18) and said stream of further precooled air, which is dehumidified and cooled (16) by passing through the active condensing means.

2. The condensing dehumidifier according to claim 1, **characterized in that** inside said box-like body (11), proximate to the output (19) from said dehumidifier (10), there are means for adjusting the temperature of the stream of dehumidified and reheated air (20) which exits from said first recovery unit (12).

3. The condensing dehumidifier according to claim 2, **characterized in that** said temperature adjustment means comprise a heating air/water exchange battery (21) for further auxiliary reheating of the stream of dehumidified and reheated air (20) which exits from said first recovery unit (12).

4. The condensing dehumidifier according to claims 2 and 3, **characterized in that** said temperature adjustment means comprise an additional cooling air/water exchange battery (22) for optional auxiliary post-cooling of the stream of dehumidified and reheated air (20) which exits from said first recovery unit (12).

5. The condensing dehumidifier according to one or more of the preceding claims, **characterized in that** said first and second condensing means are constituted respectively by a first evaporator (23) and a second evaporator (24), which operate alternately and belong to a refrigeration unit (25) which comprises a condenser (26), with its own ventilation means for heat dissipation (27), said condenser (26) being functionally connected to both of said first and second evaporators (23, 24), said refrigeration unit (25) comprising at least one compressor (27) for recirculation of the refrigeration fluid.

6. The condensing dehumidifier according to one or more of the preceding claims, **characterized in that** said means for redirecting the air streams are constituted by a series of shutters (28a, 28b, 29a, 29b, 30a, 30b, 31a, 31b), which are motorized and whose opening/closure is coordinated by an electronic control unit for managing the dehumidifier (10).

7. The condensing dehumidifier according to one or more of the preceding claims, **characterized in that** said air stream ventilation means are provided by at least one centrifugal fan (32).

8. The condensing dehumidifier according to one or more of the preceding claims, **characterized in that** it comprises, at the output of the precooled air stream (17) from said first recovery unit (12) an auxiliary precooling battery (33) of the air/water type.

9. The condensing dehumidifier according to one or more of the preceding claims, **characterized in that** said heating air/water exchange battery (21) is fed by hot water produced by means of a plate-type heat recovery unit (34) associated with said refrigeration unit (25), said plate-type recovery unit (34) being suitable to utilize at no cost the condensation heat provided by the refrigeration cycle of said refrigeration unit (25).

10. The condensing dehumidifier according to one or more of the preceding claims, **characterized in that** said box-like containment body (11) is composed of two sections, a first section (35) which contains said first recovery unit (12), said heating battery (21) and cooling battery (22), said centrifugal fan (32) and said auxiliary precooling battery (33), and a second section (36), which contains said second and third crossed-stream recovery units (13, 14) arranged in parallel and said refrigeration unit (25), said series of shutters (28a, 28b, 29a, 29b, 30a, 30b, 31a, 31b) being provided on the partition (37) between said two sections (35, 36).

11. The condensing dehumidifier according to claim 10, **characterized in that** said first section (35) is divided into four compartments:
- a first intake compartment (35a), which is provided with an intake (38) equipped with a filter (38a) for the warm air that arrives from outside and is open onto a first inlet (12a) of said first recovery unit (12);
- a second compartment (35b) for the transit of the precooled air stream (17) which exits from a first outlet (12b) of said first recovery unit (12), said centrifugal fan (32) and said auxiliary precooling battery (33) being installed in said second compartment (35b);
- a third compartment (35c) for the transit of the dehumidified and cooled air stream (16) that arrives from said second section (36), said compartment (35c) being open onto the second inlet (12c) of the first recovery unit (12);
- a fourth compartment (35d), which contains said heating battery (21) and said cooling battery (22), in which there flows said stream of dehumidified and cooled reheated air (20) that exits from the second outlet (12d) of said first recovery unit (12) and is directed toward the opening for discharge into the environment (19).

12. The condensing dehumidifier according to claims 10 and 11, **characterized in that** said second section (36) is divided into two parts (40, 41), each of which contains a second or third recovery unit (13, 14), and the associated evaporator (23, 24), said second section (36) comprising said refrigeration unit (25) as a whole.

13. The condensing dehumidifier according to claim 12, **characterized in that** each of said two parts (40, 41) that constitute said second section (36) comprises three compartments:
- a first receiving compartment (36a, 36d), inside which there flows alternately the stream of precooled air (17) that exits from said first recovery unit (12) and the stream of further precooled air (18) that exits from the adjacent second or third recovery unit (13, 14), in which the evaporator (23, 24) is inactive;
- a second compartment (36b, 36e) for dehumidification and cooling, inside which the corresponding evaporator (23, 24) is arranged;
- a third transit compartment (3 6c, 36f) alternatively for the stream of further precooled air (18) directed toward the adjacent recovery unit (13, 14) and for the stream of dehumidified and cooled air (16) which is directed toward said third compartment (35c) of the first section (35).

14. The dehumidifier according to one or more of the preceding claims, **characterized in that** said series of shutters (28a, 28b, 29a, 29b, 30a, 30b, 31a, 31b) comprises:
- a pair of first shutters (28a, 28b), each of which is suitable to connect said second compartment (35b) of the first section (35) to one of said first compartments (36a, 36d) of the second section (36),
- a pair of second shutters (29a, 29b), each of which is suitable to connect one of said third compartments (36c, 36f) of said second section (36) to the third compartment (35c) of the first section (35);
- two pairs of third shutters (30a, 30b) and fourth shutters (31a, 31b), which are suitable to connect a third compartment (36c, 36f) of a part (40, 41) of said second section (36) to the first compartment (36a, 36d) of the other part (40, 41) of said second section (36).
